# FASCICULE DE BREVET EUROPEEN

(11) **EP 3 023 333 B1**
(45) Date de publication et mention de la délivrance du brevet: **22.02.2017**
(21) Numéro de dépôt: 15195097.9
(22) Date de dépôt: 18.11.2015
(51) Int. Cl.: B64G 1/22, B65H 75/36, B64G 1/44, B64G 1/50, B64G 1/66

(54) **STRUCTURE DÉPLOYABLE ESCAMOTABLE À MÈTRE-RUBAN**
AUSFAHRBARE UND EINZIEHBARE STRUKTUR MIT MASSBAND
RETRACTABLE AND DEPLOYABLE STRUCTURE WITH TAPE MEASURE

(30) Priorité: 21.11.2014 FR 1402620
(43) Date de publication de la demande: 25.05.2016
(73) Titulaire: THALES, 92400 Courbevoie (FR)
(72) Inventeur: BAUDASSÉ, Yannick, 06156 Cannex la Bocca Cedex (FR); VÉZAIN, Stéphane, 06156 Cannex la Bocca Cedex (FR); STANEK, Didier, 06156 Cannex la Bocca Cedex (FR); GUINOT, François, 06156 Cannex la Bocca Cedex (FR)
(74) Mandataire: Collet, Alain

(56) Documents cités:
- FR-A1- 2 868 094
- GB-A- 2 298 182
- US-A- 3 243 132

## Description

La présente invention concerne une structure déployable escamotable à mètre-ruban pour une structure flexible, enroulable et déployable. Elle s'applique notamment au domaine des équipements spatiaux qui doivent être déployés en orbite et plus particulièrement aux équipements spatiaux pour satellites, tels que des antennes, des générateurs solaires, des écrans thermiques, des baffles ou des télescopes.

Les structures déployables dans l'espace, de type générateur solaire par exemple, sont généralement constituées de panneaux rigides articulés entre eux, ces panneaux étant, en position stockée, empilés les uns au-dessus des autres. Ces structures ont l'avantage d'avoir une cinématique maîtrisée mais présentent le désavantage d'une masse surfacique et d'une inertie importantes. En outre, les structures rigides occupent, en position stockée, un encombrement important sous la coiffe d'un lanceur. L'espace alloué aux structures déployables, sous la coiffe d'un lanceur, étant limité, il est important de réduire l'encombrement de ces structures déployables lorsqu'elles sont en position stockée de façon à en optimiser la surface en position déployée.

Il existe des structures planes flexibles déployables comportant une toile flexible et des mètres-ruban (aussi connus dans la littérature anglo-saxonne sous le terme tape-spring) fixés sur un même plan de la toile. En position stockée, la toile et les mètres-ruban sont enroulés autour d'un mandrin. Le déploiement de la structure plane flexible est assuré de manière autonome par le déroulement spontané des mètres-ruban lorsque le mandrin est libre en rotation.

Le document FR 2 868 094 divulgue un système de barrière automatique à ruban autorisant ou non l'accès à un lieu soumis à restrictions, tel que voie routière à péage, parc de stationnement, etc.

En effet, les mètres-ruban sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Il existe différents types de ruban ayant des propriétés propres. Les rubans monostables possèdent une position naturelle déployée et nécessitent un maintien en position stockée. Les mètres-ruban monostables ont donc une tendance naturelle à se déployer pour se retrouver dans leur état déroulé. Le déploiement des rubans monostables est souvent anarchique et incontrôlé. Les rubans bistables possèdent deux positions naturelles (position stockée et position déployée) et ne nécessitent pas de maintien en position stockée lorsque la section est totalement applatie. Leur déploiement est linéaire et contrôlé. Cependant, dans tous les cas, lorsque le déploiement est déclenché, celui-ci peut être violent et générateur de chocs, c'est-à-dire que tout le mètre-ruban peut avoir tendance à se remettre droit simultanément, sur toute sa longueur, ce qui pose un risque d'endommagement des éléments environnants ou des éléments fixés sur le mètre-ruban tels qu'une membrane flexible, un instrument, une antenne... Les mètres-ruban classiques peuvent ainsi présenter des difficultés en termes de contrôle de leur déploiement. Afin de réguler la vitesse de déploiement de ce type de structure, plusieurs méthodes peuvent être utilisées. On peut citer par exemple une régulation par motoréducteur électrique comme décrit dans la demande de brevet FR12/03300 ou une régulation thermique par utilisation de mètres-ruban hybrides comme décrit dans les brevets FR 0803986 et US 7856735.

En outre, les mètres-ruban n'ont pas la même raideur suivant l'axe de contrainte. Un effort F appliqué sur la face convexe du mètre-ruban va avoir tendance à faire fléchir le mètre-ruban alors que le même effort appliqué sur la face concave n'aura aucun effet, ce qui pose un problème d'instabilité de la structure flexible dans son état déployé. Pour résoudre ce problème de stabilité de l'état déployé, il est alors nécessaire de maintenir le mètre-ruban en position déployée par un dispositif de maintien supplémentaire ou de sur-dimensionner le mètre-ruban pour qu'il reste stable sous les efforts orbitaux, quels que soient leurs sens d'application.

Ainsi, en configuration stockée, le mètre-ruban doit être le plus compact possible, c'est-à-dire avoir un rayon d'enroulement le plus faible possible. Ce paramètre est donné par les caractéristiques physiques du ruban, généralement, le rayon d'enroulement est sensiblement égal à celui de leur rayon de courbure. Dans le cas d'un ruban composite, il peut être modifié en changeant l'empilage des plis et/ou le sens des fibres. En configuration déployée, la meilleure rigidité possible est recherchée, ce qui signifie une section la plus grande et la plus fermée possible associée à un encastrement de l'extrémité du mètre-ruban le plus important possible. Généralement, le déploiement du mètre-ruban est obtenu par déroulement du mètre-ruban autour d'un mandrin. Pendant le déploiement, le mètre-ruban a une rigidité dégradée du fait de la souplesse naturelle du mètre-ruban dans sa zone d'enroulement. La rigidité optimale est obtenue en fin de déploiement, quand on remplace la zone d'enroulement par un encastrement réel. Néanmoins, il est parfois souhaitable que la structure déployable soit opérationnelle dans toutes les phases de déploiement du mètre-ruban, c'est-à-dire en configuration de déploiement total ou partiel. Dans le cas d'une structure déployable ré-enroulable, il est nécessaire de créer un encastrement à l'ancrage du mètre-ruban permettant de garantir une rigidité compatible du besoin. Pour ce faire, on utilise généralement une rampe de guidage équipée de galets permettant d'obtenir simultanément l'extraction du mètre-ruban avec un bon encastrement. Cette solution est compatible du besoin mais pose différents problèmes, à savoir un risque d'arc-boutement ou déroulement intempestif du mètre-ruban si on veut utiliser l'énergie emmagasinée du mètre-ruban, une cinématique aléatoire de l'extrémité du ruban et un volume conséquent souvent incompatible du volume alloué au stockage.

Le diamètre du mètre-ruban évoluant tout au long du déploiement, il est nécessaire de réaliser plusieurs guidages complémentaires, en sortie de mètre-ruban, pour garantir le bon fonctionnement de l'ensemble de la structure déployable.

L'invention vise à pallier tout ou partie des problèmes cités plus haut en proposant une structure déployable escamotable pour une structure flexible, enroulable et déployable, présentant l'avantage d'être peu encombrante, simple à réaliser, présentant une optimisation du volume de la structure déployable lorsqu'elle est stockée sous la coiffe d'un lanceur, permettant une orientation maîtrisée du déploiement, un bon guidage du mètre-ruban malgré son diamètre évolutif et une capacité de reploiement et permettant une rigidité et une stabilité de la structure lorsqu'elle est déployée.

A cet effet, l'invention a pour objet une structure déployable comprenant :
- un bâti comprenant un premier point et un deuxième point en vis-à-vis et un troisième point,
- un rouleau de stockage mobile en rotation autour d'un axe Z,
- un mètre-ruban apte à passer d'une configuration enroulée autour de l'axe Z dans le rouleau de stockage à une configuration déployée selon un axe X sensiblement perpendiculaire à l'axe Z, les premier et deuxième points formant un appui double avec le mètre-ruban de façon à maintenir le mètre-ruban en configuration déployée, le troisième point étant apte à former un appui simple
   avec le mètre-ruban, le rouleau de stockage étant mobile par rapport
   au troisième point, le rouleau de stockage étant plaqué contre le
   troisième point de manière à guider le déploiement du mètre-ruban, caractérisée en ce
   que la structure déployable comprend
   - un levier de guidage 17 comprenant deux extrémités 18, 19, une première des deux extrémités 18 étant en liaison pivot par rapport au bâti 11, une seconde des deux extrémités 19 étant solidaire du centre du rouleau de guidage 15,
   - un élément élastique 21 disposé entre le levier de guidage 17 et le bâti 11, destiné à pousser le levier de guidage 17 de manière à plaquer le rouleau de stockage 15 contre le troisième point 14.

Selon un mode de réalisation, le bâti comprend un dispositif de guidage et un socle, les premier, deuxième et troisième points sont solidaires du dispositif de guidage, le dispositif de guidage est articulé par rapport au socle, préférentiellement autour du troisième point, et mobile en rotation autour d'un axe parallèle à l'axe Z entre une position fermée et une position ouverte et inversement.

Selon un autre mode de réalisation, la première des deux extrémités du levier de guidage est en liaison pivot par rapport au bâti, la seconde des deux extrémités est solidaire du centre du rouleau de guidage, et l'élément élastique est disposé entre le levier de guidage et le bâti, et destiné à pousser le levier de guidage de manière à plaquer le rouleau de stockage contre le troisième point.

Selon un autre mode de réalisation, la première extrémité du levier de guidage est en liaison pivot par rapport au socle, la seconde extrémité est solidaire du centre du rouleau de guidage, l'élément élastique est disposé entre le levier de guidage et le socle, destiné à pousser le levier de guidage de manière à plaquer le rouleau de stockage contre le troisième point.

Selon un autre mode de réalisation, la structure déployable comprend en outre une came, par exemple à rainure, positionnée sur le rouleau de stockage et le dispositif de guidage comprend un galet destiné à être guidé de façon à piloter la rotation du dispositif de guidage pendant le déploiement du ruban.

Avantageusement, la structure déployable comprend un système de maintien du levier de guidage et du dispositif de guidage en configuration enroulée destiné à libérer simultanément le levier de guidage et le dispositif de guidage quand le mètre-ruban passe de la configuration enroulée à la configuration déployée.

Avantageusement, la came comprend un élément anti-retour, destiné à empêcher la rotation du dispositif de guidage vers la position fermée.

Selon un autre mode de réalisation, le mètre-ruban ayant deux extrémités, une première extrémité du mètre-ruban est fixée au rouleau de stockage et une seconde extrémité du mètre-ruban est fixée au socle.

Avantageusement, la structure peut comprendre en outre un mât articulé déployable destiné à être fixée sur une plateforme d'un satellite par l'intermédiaire
d'un ou plusieurs moteurs d'entraînement en rotation.

L'invention concerne aussi un satellite comprenant au moins une structure déployable.

L'invention sera mieux comprise et d'autres avantages apparaîtront à la lecture de la description détaillée d'un mode de réalisation donné à titre d'exemple, description illustrée par le dessin joint dans lequel :
- les figures 1 a et 1 b représentent chacune un schéma, en coupe dans un plan perpendiculaire à un axe Z, axe d'enroulement du mètre-ruban, d'un premier mode de réalisation d'une structure déployable selon l'invention, le mètre-ruban respectivement en configuration enroulée et partiellement déroulée,
- la figure 2 représente un schéma, en coupe dans le plan perpendiculaire à l'axe Z, du premier mode de réalisation de la structure déployable selon l'invention, le mètre-ruban en configuration partiellement déployée,
- les figures 3a, 3b, 3c représentent différentes configurations possibles pour le positionnement des appuis sur le mètre-ruban,
- la figure 4 représente un schéma, en coupe dans un plan perpendiculaire à l'axe Z, d'un deuxième mode de réalisation d'une structure déployable selon l'invention, le mètre-ruban en configuration enroulée,
- la figure 5 représente un schéma, en coupe dans un plan perpendiculaire à l'axe Z, du deuxième mode de réalisation d'une structure déployable selon l'invention, le mètre-ruban en configuration déployée,
- la figure 6 représente un schéma, en coupe dans un plan perpendiculaire à l'axe Z, d'un troisième mode de réalisation d'une structure déployable selon l'invention, le mètre-ruban en configuration partiellement déployée et ayant une extrémité fixée au socle,
- les figures 7, 8, 9 représentent un schéma, en coupe dans un plan perpendiculaire à l'axe Z, d'un quatrième mode de réalisation d'une structure déployable selon l'invention, le mètre-ruban ayant une extrémité fixée au socle, chacune des figures correspondant à une configuration de déploiement différente,
- la figure 10 représente schématiquement un satellite comprenant au moins une structure déployable selon l'invention.

Par souci de clarté, les mêmes éléments porteront les mêmes repères dans les différentes figures.

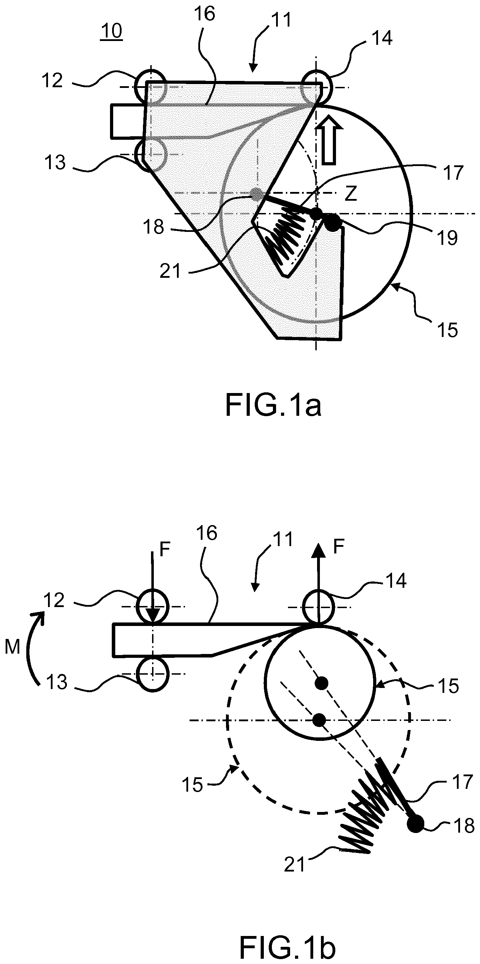

Les figures 1 a et 1 b représentent un schéma d'un premier mode de réalisation d'une structure déployable 10 selon l'invention. La structure déployable 10 comprend un bâti 11 comprenant un premier point 12 et un deuxième point 13 en vis-à-vis et un troisième point 14. Elle comprend un rouleau de stockage 15 mobile en rotation autour d'un axe Z et un mètre-ruban 16 apte à passer d'une configuration enroulée autour de l'axe Z dans le rouleau de stockage 15 à une configuration déployée selon un axe X sensiblement perpendiculaire à l'axe Z, les premier et deuxième points 12, 13 formant un appui double avec le mètre-ruban 16 de façon à maintenir le mètre-ruban 16 en configuration déployée. Selon l'invention, le troisième point 14 est apte à former un appui simple avec le mètre-ruban 16, le rouleau de stockage 15 est mobile par rapport au troisième point 14 et le rouleau de stockage 15 est plaqué contre le troisième point 14 de manière à guider le déploiement du mètre-ruban 16.

Les trois points 12, 13, 14, en formant des appuis sur le mètre-ruban 16, permettent une orientation maîtrisée du déploiement du mètre-ruban 16. Les points 12 et 13 permettent en plus un déroulement correct du mètre-ruban 16.

L'appui formé par le point 14 sur le mètre-ruban 16 est un contact ponctuel mais on peut considérer dans un sens plus large le point 14 comme un appui longitudinal et dans ce cas, cet appui peut aussi former un contact longitudinal selon un axe sensiblement perpendiculaire à l'axe X, le long de toute la largeur du mètre-ruban 16 ou de seulement une partie de la largeur du mètre-ruban 16. En effet, sans ce contact, le mètre-ruban pourrait se déployer de manière incontrôlée selon un axe quelconque. Le point 14 permet de contrôler le déploiement du mètre-ruban grâce à un couple résistant plus ou moins important suivant le type de régulation choisi (hybride ou électrique). Le contact est avantageusement positionné à proximité de la partie déployée du mètre-ruban 16, afin de permettre un encastrement et contribuer au maintien du mètre-ruban 16 dans sa partie enroulée. Les points 12, 13, 14 peuvent êtres constitués d'un appui simple ou d'un galet afin de limiter les frottements lors de phases de déploiement ou de reploiement.

La structure déployable 10 peut comprendre un levier de guidage 17 comprenant deux extrémités 18, 19, une première des deux extrémités 18 du levier de guidage 17 étant en liaison pivot par rapport au bâti 11, une seconde des deux extrémités 19 étant solidaire du centre du rouleau de guidage 15. Plus précisément, le levier de guidage 17 est en contact avec le bâti 11 à son extrémité 18 et en contact avec le rouleau de stockage 15 à son extrémité 19 qui forme aussi un contact avec le bâti 11 en position enroulée du mètre-ruban, ce qui permet d'éviter le déroulement du mètre-ruban 16. La structure déployable 10 comprend aussi un élément élastique 21 disposé entre le levier de guidage 17 et le bâti 11, destiné à pousser le levier de guidage 17 de manière à plaquer le rouleau de stockage 15 contre le troisième point 14. La poussée de l'élément élastique 21 sur le levier de guidage 17 se fait dans une direction ayant une composante selon un axe Y, passant par les centres de 14 et 15 et, si possible, sensiblement perpendiculaire aux axes X et Z. Cependant, afin de contrer plus aisément les efforts du mètre-ruban 16 sur le rouleau 15 en configuration déployée, l'axe 18 peut être positionné différemment sur le bâti 11. Sa position en configuration déployée pourrait être préférentiellement sensiblement parallèle à celle de l'effort de manière à ce que son influence sur l'élément élastique 21 soit négligeable, comme représenté sur la figure 1 b. Autrement dit, l'élément élastique 21 pousse le levier de guidage 17 vers le troisième point 14. Sans sortir du cadre de l'invention, le levier de guidage 17 et l'élément élastique 21 peuvent être remplacés par tout autre élément assurant le plaquage du rouleau de stockage 15 contre le troisième point 14.

Comme le rouleau de stockage 15 est plaqué contre le troisième point 14, malgré le diamètre évolutif du mètre-ruban lors de son déploiement, l'appui simple formé par le point 14 est toujours présent, ce qui a l'avantage de guider le déploiement du mètre-ruban 16 de manière maîtrisée.

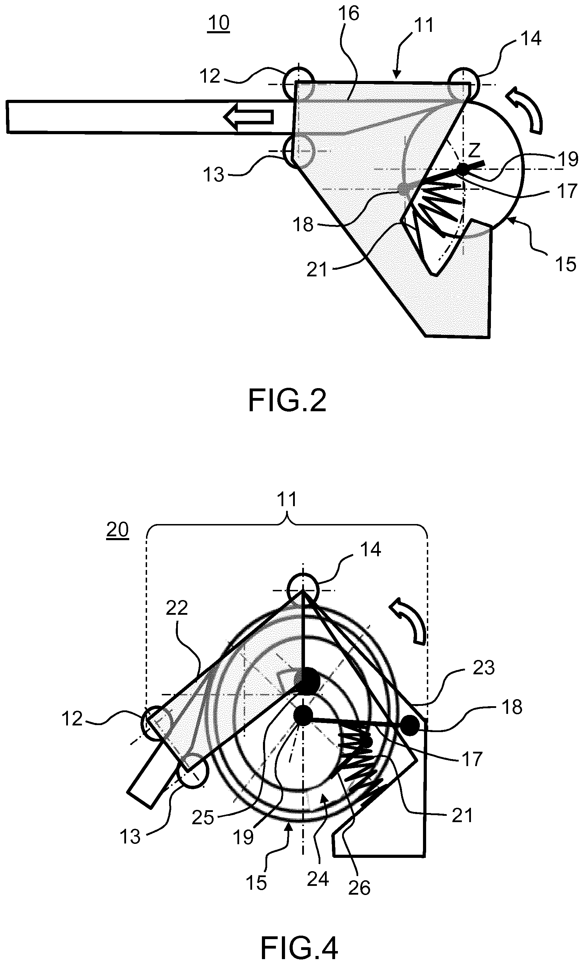

La figure 2 représente un schéma, en coupe dans le plan perpendiculaire à l'axe Z, du premier mode de réalisation de la structure déployable 10 selon l'invention, le mètre-ruban 16 en configuration partiellement déployée. Tous les éléments de la figure 2 sont identiques à ceux de la figure 1 a. Pour passer de la configuration enroulée de la structure déployable représentée sur la figure 1 a à la configuration partiellement déployée de la structure 10 représentée sur la figure 2, le levier de guidage 17 est tout d'abord détaché par rapport au bâti 11 au niveau de l'extrémité 19 par le biais d'un système de dégerbage. Le rouleau de stockage 15 vient alors se positionner en pression contre le troisième point 14 sous l'action de l'élément élastique 21.

Un moteur ou tout autre système de régulation de vitesse de déploiement permet de maîtriser le déroulement du mètre-ruban 16 autour du rouleau de stockage 15 entraînant la réduction du diamètre du rouleau de stockage 15 au fur et à mesure que le mètre-ruban 16 se déploie. L'extrémité 18 du levier de guidage étant en liaison pivot avec le bâti 11 et l'extrémité 19 du levier de guidage 17 étant équipée d'un guidage en rotation du rouleau de stockage 15, le levier de guidage 17 va pousser le rouleau de stockage 15 vers le troisième point 14. Cette poussée est favorisée par la présence de l'élément élastique 21. Comme représenté sur la figure 2, le mètre-ruban 16 est en configuration partiellement déployée. Sa sortie est linéaire entre les premiers et deuxièmes points 12, 13. Le diamètre du mètre-ruban 16 est donc inférieur à celui du mètre-ruban 16 en configuration enroulée. Néanmoins, grâce au levier de guidage 17, le rouleau de stockage 15 est toujours maintenu plaqué contre le troisième point 14. Il est important que le rouleau de stockage soit bien maintenu. En effet, s'il était mal maintenu, il se produirait un glissement entre les différentes couches du mètre-ruban 16, ce qui pourrait engendrer des dégradations des cellules solaires positionnées sur ces couches.

Il est par ailleurs possible, dans le souci d'avoir une bonne adhérence des couches entre elles, d'ajouter un élément adhérent sur le mètre-ruban 16. L'élément adhérent peut par exemple être une bande adhésive, une bande crantée ou une bande auto-agrippante.

Les trois points 12, 13, 14 permettent un bon encastrement de la structure déployable 10, et donc une bonne rigidité de la structure, dans toutes les configurations de déploiement du mètre-ruban 16, c'est-à-dire en position enroulée, en position totalement ou partiellement déployée.

En fonction de l'orientation des efforts ou des moments en bout de mètre-ruban 16, il est possible de supprimer un des deux appuis 12 ou 13.

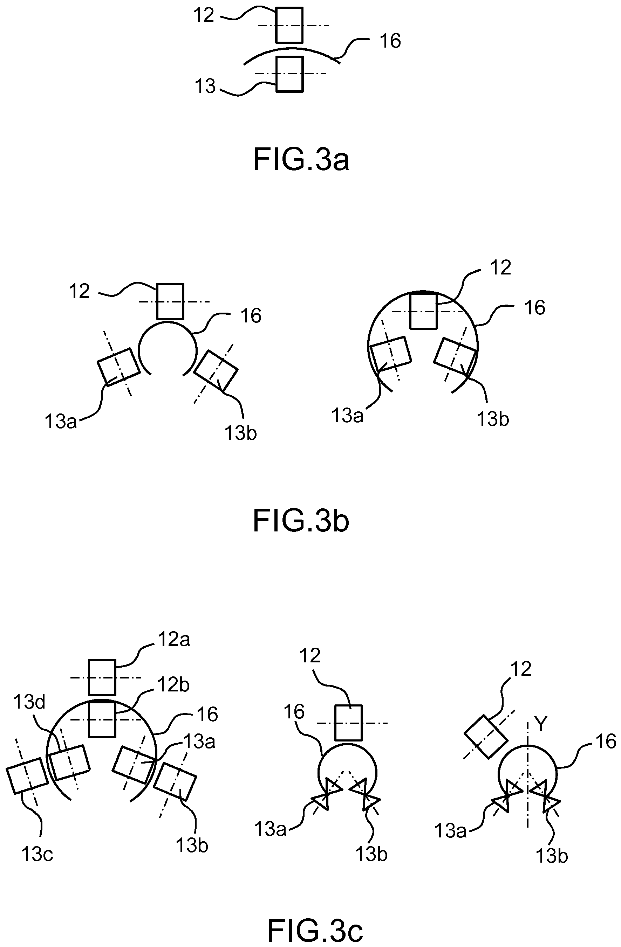

Les figures 3a, 3b, 3c représentent différentes configurations possibles pour le positionnement des appuis sur le mètre-ruban 16. Les points 12 et 13 peuvent être en vis-à-vis, comme représenté sur la figure 3a, et former ainsi un appui double de part et d'autre du mètre-ruban 16. L'appui formé par le point 13, au lieu d'être appliqué en vis-à-vis du point 12, peut être réparti en deux appuis au niveau de deux points 13a et 13b, toujours dans un même plan perpendiculairement à l'axe de déploiement du mètre-ruban 16. Les deux points 13a et 13b sont alors positionnés à l'extrémité sur le mètre-ruban 16 dans sa largeur. Les trois points 12, 13a, 13b peuvent appuyer sur la face extérieure ou sur la face intérieure du mètre-ruban 16, comme représenté sur la figure 3b. Enfin, comme représenté sur la figure 3c, les points 13a et 13b peuvent être positionnés de manière à former chacun un appui à l'extrémité de la section en arc de cercle. L'appui 12, quant à lui, peut être orienté selon l'axe Y, mais il peut aussi être décalé par rapport à l'axe Y.

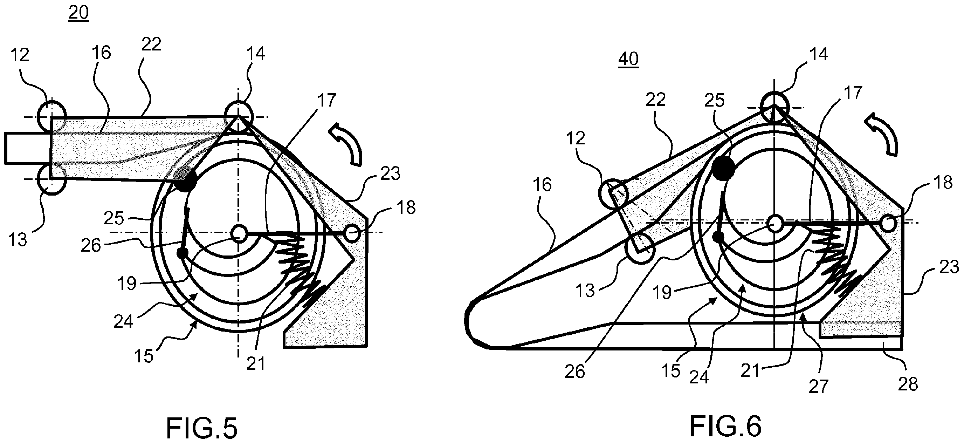

La figure 4 représente un schéma, en coupe dans un plan perpendiculaire à l'axe Z, d'un deuxième mode de réalisation d'une structure déployable 20 selon l'invention, le mètre-ruban 16 en configuration enroulée. La figure 5 représente un schéma, en coupe dans un plan perpendiculaire à l'axe Z, du deuxième mode de réalisation de la structure déployable 20 selon l'invention, le mètre-ruban en configuration déployée. Tous les éléments de la structure déployable 20 représentée sur la figure 5 sont identiques à ceux de la structure déployable 20 représentée sur la figure 4.

De même que la structure déployable 10 représentée sur la figure 1a, la structure déployée 20 représentée sur la figure 4 comprend un bâti 11 comprenant le premier point 12 et le deuxième point 13 en vis-à-vis et le troisième point 14. Elle comprend le rouleau de stockage 15 mobile en rotation autour de l'axe Z et le mètre-ruban 16 apte à passer d'une configuration enroulée autour de l'axe Z dans le rouleau de stockage 15 à une configuration déployée selon l'axe X, les premier et deuxième points 12, 13 formant un appui double avec le mètre-ruban 16 de façon à maintenir le mètre-ruban 16 en configuration déployée. Le troisième point 14 est apte à former un appui simple avec le mètre-ruban 16, le rouleau de stockage 15 est mobile par rapport au troisième point 14 et le rouleau de stockage 15 est plaqué contre le troisième point 14 de manière à guider le déploiement du mètre-ruban 16.

Sur la figure 4, le bâti 11 comprend un dispositif de guidage 22 et un socle 23. Les premier 12, deuxième 13 et troisième 14 points sont solidaires du dispositif de guidage 22. Le dispositif de guidage 22 est articulé par rapport au socle 23, préférentiellement autour du troisième point 14, et mobile en rotation autour d'un axe parallèle à l'axe Z entre une position fermée et une position ouverte et inversement. La position ouverte du dispositif de guidage permet d'orienter le déploiement du mètre-ruban 16. Cette configuration permet d'avoir un volume réduit de la structure déployable 20 en position stockée. En configuration stockée, le dispositif de guidage 22 peut être stocké sous le rouleau de stockage 15.

La structure déployable 20 peut comprendre en outre une came 24 positionnée sur le rouleau de stockage 15. Le dispositif de guidage 22 comprend un galet 25 destiné à être guidé de façon à piloter la rotation du dispositif de guidage 22. Par exemple, la came 24 peut être une came à rainure. Dans ce cas, le dispositif de guidage 22 comprend un galet 25 destiné à être logé dans la rainure de façon à piloter la rotation du dispositif de guidage 22 en prenant appui sur le rouleau de stockage 15. La structure déployable 20 comprend en outre un levier de guidage 17 et un élément élastique 21. La première extrémité 18 du levier de guidage 17 étant en liaison pivot par rapport au socle 23, la seconde extrémité 19 est solidaire du centre du rouleau de guidage 15. L'élément élastique 21 est disposé entre le levier de guidage 17 et le socle 23, et est destiné à pousser le levier de guidage 17 de manière à plaquer le rouleau de stockage 15 contre le troisième point 14, comme expliqué précédemment pour la structure déployable 10.

Ainsi, on peut considérer que la structure déployable comprend un système de maintien 19 du levier de guidage 17 et du dispositif de guidage 22 en configuration enroulée destiné à libérer simultanément le levier de guidage 17 et le dispositif de guidage 22 quand le mètre-ruban 16 passe de la configuration enroulée à la configuration déployée. Quand on souhaite passer de la configuration enroulée (comme représentée sur la figure 4) à la configuration déployée (totalement ou partiellement, comme représenté sur la figure 5), on procède à la libération simultanée du levier 17 et du dispositif de guidage 22 par l'intermédiaire d'un système de gerbage, puis au déclenchement du déroulement du mètre-ruban 16 au moyen d'un moteur ou tout autre système de régulation de vitesse, le mètre-ruban étant automoteur. Autrement dit, le levier de guidage 17 est tout d'abord détaché par rapport au bâti 11 au niveau de l'extrémité par le biais d'un système de dégerbage. Le rouleau de guidage 15 vient alors se positionner en pression contre le troisième point 14 sous l'action de l'élément élastique 21.

Le galet 25 logé dans la rainure se déplace dans la rainure en suivant le profil de la came à rainure 24. Comme le dispositif de guidage 22 est articulé autour du troisième point 14, il sort de la position stockée au fur et à mesure du déploiement du mètre-ruban 16. Le déploiement du dispositif de guidage 22 articulé est ainsi maîtrisé. Cette configuration permet d'assurer une bonne rigidité de la structure, et notamment du mètre-ruban 16, pendant tout le déploiement du mètre-ruban 16 tout en limitant l'encombrement de la structure déployable 20. Le galet 25 a piloté l'ouverture du dispositif de guidage 22 qui est en position déployée. Le mètre-ruban 16 est lui aussi en position déployée.

La came 24 peut comprendre un élément anti-retour 26, destiné à empêcher la rotation du dispositif de guidage 22 vers la position fermée. Dans l'exemple d'une came à rainure, l'élément anti-retour 26 est destiné à obstruer la rainure de façon à empêcher la rotation du dispositif de guidage 22 vers la position fermée. Généralement, la structure déployable 20 est en position stockée uniquement au lancement du satellite. Une fois en orbite, on procède au déploiement de la structure déployable 20, et il est parfois nécessaire de la reployer partiellement. Dans ce cas, on ne souhaite pas un reploiement total, et donc il n'est pas souhaitable que le dispositif de guidage 22 soit piloté vers sa position fermée. L'élément anti-retour 26 bloque le galet 25 dans la rainure et empêche ainsi le retour en position fermée du système de guidage 22 et donc de la structure déployable 20.

L'invention est compatible de l'utilisation d'un mètre-ruban simple mais aussi d'un mètre-ruban monté en opposition. La figure 6 représente un schéma, en coupe dans un plan perpendiculaire à l'axe Z, d'un troisième mode de réalisation d'une structure déployable 40 selon l'invention, le mètre-ruban 16 étant monté en opposition et en configuration partiellement déployée. Tous les éléments de la structure déployable 40 représentée sur la figure 6 sont identiques à ceux de la structure déployable 30 représentée sur la figure 5, la seule différence résidant dans le fait que le mètre-ruban 16 est monté en opposition. Le mètre-ruban 16 a deux extrémités 27, 28, une première extrémité 27 du mètre-ruban 16 est fixée au rouleau de stockage 15 et une seconde extrémité 28 du mètre-ruban 16 est fixée au socle 23. Cette configuration est avantageuse: le mètre-ruban 16 étant en contact direct avec le socle 23, lui-même fixé au satellite, l'énergie collectée au niveau des cellules solaires sur le mètre-ruban 16 peut ainsi être directement véhiculée vers le satellite. Sans ce montage en opposition du mètre-ruban, un collecteur électrique est nécessaire pour amener l'énergie des cellules solaires vers le satellite. De la même manière, les sections du mètre-ruban étant en opposition, l'orientation des efforts ou des moments sur la partie supérieure du mètre-ruban 16 étant unidirectionnelle, il est possible de supprimer un des deux appuis 12 ou 13.

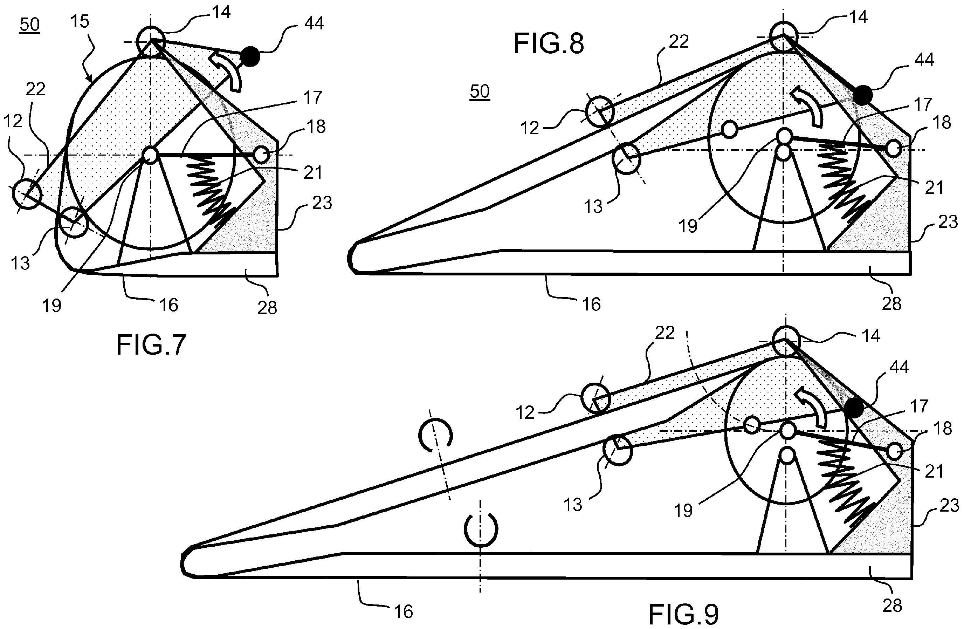

Les figures 7, 8, 9 représentent un schéma, en coupe dans un plan perpendiculaire à l'axe Z, d'un quatrième mode de réalisation d'une structure déployable 50 selon l'invention, le mètre-ruban 16 ayant une extrémité 28 fixée au socle 23, chacune des figures correspondant à une configuration de déploiement différente. Tous les éléments de la structure déployable 50 représentée sur les figures 7, 8, 9 sont identiques à ceux de la structure déployable 40 représentée sur la figure 6, la came à rainure étant ici remplacée par un appui direct 44 sur le rouleau de stockage 15. Sur la figure 7, le mètre-ruban 16 et le dispositif de guidage 22 sont en position stockée. Le levier de guidage 17 a son extrémité 19 en contact à la fois avec le centre du rouleau de stockage 15 et le dispositif de guidage 22. Sur la figure 8, la structure déployable 50 est en configuration partiellement déployée. L'extrémité 19 du levier de guidage 17 a été détachée, libérant ainsi le dispositif de guidage 22 et permettant à l'élément élastique 21 de pousser le rouleau de stockage 15 vers le troisième point 14. Au fur et à mesure que le mètre-ruban 16 se déroule, le dispositif de guidage 22 se déploie. En se déroulant, le mètre-ruban 16 a un diamètre qui diminue. Inversement, lors d'une phase d'enroulement partiel, le mètre-ruban 16 a son diamètre qui augmente. Malgré son diamètre évolutif, le mètre-ruban 16 est plaqué en permanence contre le troisième point 14, ce qui contribue à une très bonne stabilité et une forte raideur à l'encastrement quelque soit la longueur de mètre-ruban déployée et même si le mètre-ruban 16 n'est pas verrouillé sur son encastrement de position finale, c'est-à-dire complètement déployé. Un autre avantage majeur réside dans la compacité de la structure déployable en position stockée puisque l'espace dédié aux structures déployables sous la coiffe d'un lanceur est limité. Enfin, les structures déployables décrites dans le cadre de l'invention présentent une simplicité d'assemblage et une facilité de mise en oeuvre.

L'invention peut s'appliquer aux mètres-ruban hybrides, constitués d'une première structure motrice (par exemple en fibre de carbone) qui permet le déploiement du mètre-ruban, et d'une partie régulatrice (thermoélastique ou en un matériau ayant des propriétés viscoélastiques qui limite la vitesse de déploiement sous l'effet de la contrainte interne au matériau ou en un matériau ayant une température de transformation notablement inférieure à celle du ruban principal) qui favorise ou limite le déploiement en fonction de la température qui lui est appliquée. En utilisant un phénomène naturel de changement de viscosité d'un matériau par la température une bonne fiabilité et une reproductibilité de régulation du déploiement sont garanties.

On peut noter que dans le cas de l'utilisation de mètres-ruban hybrides, le reploiement est impossible par la simple force du mètre-ruban car le mètre-ruban n'est moteur que dans le sens de déploiement. Pour permettre un reploiement du mètre-ruban, il faut y adjoindre un motoréducteur électrique. De ce fait, si on souhaite un déploiement monocoup, il est possible d'avoir une régulation et/ou motorisation hybride ou électrique. Si des déploiements multiples du mètre-ruban sont à prévoir, la régulation et/ou motorisation devra alors être électrique. Et on peut prévoir un chauffage dans la zone des appuis 12, 13 et 14 par exemple.

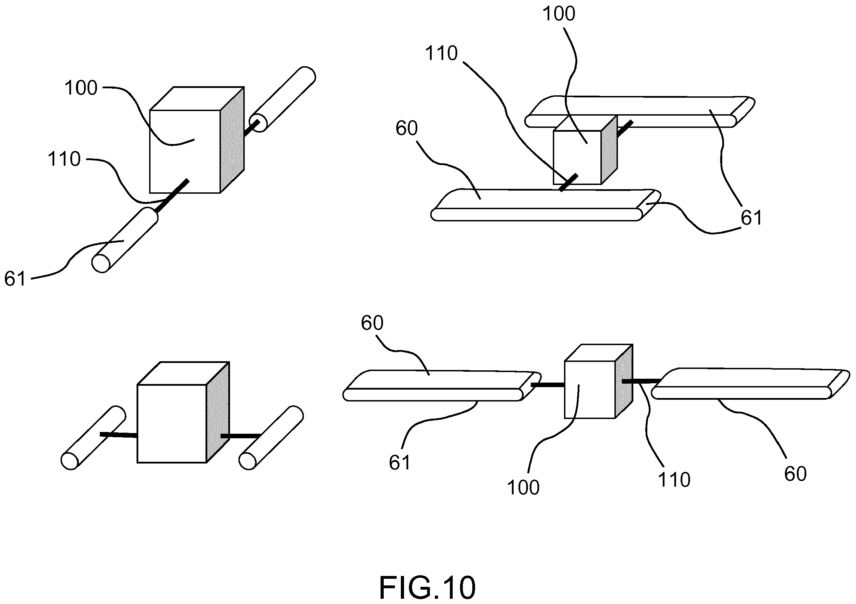

La figure 10 représente un satellite 100 comprenant au moins un dispositif de déploiement 61 équipé d'une membrane flexible 60 et d'au moins 2 structures déployables selon l'invention. La structure déployable 61 comprend en outre un mât articulé 110 déployable fixé sur une plateforme du satellite 100 par l'intermédiaire par exemple d'un ou plusieurs moteurs d'entraînement en rotation. Sur la figure 10, la membrane flexible 60 est complètement déployée. Le satellite 100 comprend une deuxième membrane flexible 60. Les deux dispositifs de déploiement 61 sont positionnés de part et d'autre du satellite 100. Le dispositif de déploiement 61 peut être positionné en forme de T par rapport au satellite 100 (configuration représentée en haut de la figure 10), c'est-à-dire que sa direction principale longitudinale est perpendiculaire au mât articulé 110. Le dispositif de déploiement peut également être positionné en forme de I (configuration représentée en bas de la figure 10), par rapport au satellite 100, c'est-à-dire que sa direction principale longitudinale est dans le prolongement du mât articulé 110.

Généralement, en utilisation réelle, la structure déployable selon l'invention n'est utilisée que pour un seul déploiement. Néanmoins de nouveaux besoins de mission apparaissent. Notamment le transfert ou le remorquage de satellite d'une orbite basse vers une orbite haute. Lors de l'accostage, pour le pilotage du véhicule de transfert, il faut le moins d'inertie possible, c'est-à-dire que la présence de structures déployables de grandes dimensions n'est pas favorable. Il faut éviter aussi toute interférence avec les satellites que l'on cherche à accoster. De ce fait, il est préférable d'enrouler les structures déployables. Quand le satellite est accroché, on peut de nouveau déployer la structure.

## Revendications

1. Structure déployable (10, 20, 40, 50) comprenant :
• un bâti (11) comprenant un premier point (12) et un deuxième point (13) en vis-à-vis et un troisième point (14),
• un rouleau de stockage (15) mobile en rotation autour d'un axe Z,
• un mètre-ruban (16) apte à passer d'une configuration enroulée autour de l'axe Z dans le rouleau de stockage (15) à une configuration déployée selon un axe X sensiblement perpendiculaire à l'axe Z, les premier et deuxième points (12, 13) formant un appui double avec le mètre-ruban (16) de façon à maintenir le mètre-ruban (16) en configuration déployée, le troisième point (14) étant apte à former un appui simple avec le mètre-ruban (16), le rouleau de stockage (15) étant mobile par rapport au troisième point (14), le rouleau de stockage (15) étant plaqué contre le troisième point (14) de manière à guider le déploiement du mètre-ruban (16), **caractérisée en ce que** la structure déployable comprend
• un levier de guidage (17) comprenant deux extrémités (18, 19), une première des deux extrémités (18) étant en liaison pivot par rapport au bâti (11), une seconde des deux extrémités (19) étant solidaire du centre du rouleau de guidage (15),
• un élément élastique (21) disposé entre le levier de guidage (17) et le bâti (11), destiné à pousser le levier de guidage (17) de manière à plaquer le rouleau de stockage (15) contre le troisième point (14).

2. Structure déployable (20, 40, 50) selon la revendication 1, **caractérisée en ce que** le bâti (11) comprend un dispositif de guidage (22) et un socle (23), **en ce que** les premier (12), deuxième (13) et troisième (14) points sont solidaires du dispositif de guidage (22), et **en ce que** le dispositif de guidage est articulé par rapport au socle et mobile en rotation autour d'un axe parallèle à l'axe Z entre une position fermée et une position ouverte et inversement.

3. Structure déployable (20, 40, 50) selon la revendication 2, **caractérisée en ce que**
• la première extrémité (18) du levier de guidage (17) est en liaison pivot par rapport au socle (23), la seconde extrémité (19) est solidaire du centre du rouleau de guidage (15), et **en ce que**
• l'élément élastique (21) est disposé entre le levier de guidage (17) et le socle (23), et destiné à pousser le levier de guidage (17) de manière à plaquer le rouleau de stockage (15) contre le troisième point (14).

4. Structure déployable (20, 40, 50) selon la revendication précédente, **caractérisée en ce qu'**elle comprend un système de maintien (19) du levier de guidage (17) et du dispositif de guidage (22) en configuration enroulée destiné à libérer simultanément le levier de guidage (17) et le dispositif de guidage (22) quand le mètre-ruban (16) passe de la configuration enroulée à la configuration déployée.

5. Structure déployable (20, 40) selon l'une des revendications 2 à 4, **caractérisée en ce qu'**elle comprend en outre une came (24) positionnée sur le rouleau de stockage (15) et **en ce que** le dispositif de guidage (22) comprend un galet (25) destiné à être guidé de façon à piloter la rotation du dispositif de guidage (22).

6. Structure déployable (20, 40) selon la revendication précédente, **caractérisée en ce que** la came (24) comprend un élément anti-retour (26), destiné à empêcher la rotation du dispositif de guidage (22) vers la position fermée.

7. Structure déployable (40, 50) selon l'une des revendications 1 à 6, le mètre-ruban (16) ayant deux extrémités (27, 28), **caractérisée en ce qu'**une première extrémité (27) du mètre-ruban (16) est fixée au rouleau de stockage (15) et **en ce qu'**une seconde extrémité (28) du mètre-ruban (16) est fixée au socle (23).

8. Structure déployable (10, 20, 40, 50) selon l'une des revendications précédentes, **caractérisée en ce qu'**elle comprend en outre un mât articulé (110) déployable destiné à être fixé sur une plateforme d'un satellite (100) par l'intermédiaire d'un moteur d'entraînement en rotation.

9. Satellite (100) **caractérisé en ce qu'**il comprend au moins une structure déployable (10, 20, 40, 50) selon la revendication précédente.

## Patentansprüche

1. Ausfahrbare Struktur (10, 20, 40, 50), aufweisend:
• ein Tragelement (11), das einen ersten Punkt (12) und einen gegenüberliegenden zweiten Punkt (13) und einen dritten Punkt (14) aufweist,
• eine Lagerrolle (15), die um eine Achse Z drehbeweglich ist,
• ein Maßband (16), das fähig ist, von einer um die Achse Z aufgerollten Konfiguration in der Lagerrolle (15) in eine ausgefahrene Konfiguration entlang einer Achse X überzugehen, die im Wesentlichen senkrecht zur Achse Z verläuft, wobei der erste und der zweite Punkt (12, 13) eine doppelte Auflage mit dem Maßband (16) bilden, um das Maßband (16) in ausgefahrener Konfiguration zu halten, wobei der dritte Punkt (14) fähig ist, eine einfache Auflage mit dem Maßband (16) zu bilden, wobei die Lagerrolle (15) in Bezug auf den dritten Punkt (14) beweglich ist, wobei die Lagerrolle (15) so gegen den dritten Punkt (14) gepresst wird, dass sie das Ausfahren des Maßbands (16) führt, **dadurch gekennzeichnet, dass** die ausfahrbare Struktur aufweist
• einen Führungshebel (17), der zwei Enden (18, 19) aufweist, wobei ein erstes der beiden Enden (18) in Bezug auf das Tragelement (11) in einer Schwenkverbindung steht, wobei ein zweites der beiden Enden (19) fest mit dem Mittelpunkt der Lagerrolle (15) verbunden ist,
• ein elastisches Element (21), das zwischen dem Führungshebel (17) und dem Tragelement (11) angeordnet ist, dazu bestimmt, so auf den Führungshebel (17) zu drücken, dass die Lagerrolle (15) gegen den dritten Punkt (14) gepresst wird.

2. Ausfahrbare Struktur (20, 40, 50) nach Anspruch 1, **dadurch gekennzeichnet, dass** das Tragelement (11) eine Führungsvorrichtung (22) und eine Grundplatte (23) aufweist, dadurch, dass der erste (12), der zweite (13) und der dritte (14) Punkt fest mit der Führungsvorrichtung (22) verbunden sind, und dadurch, dass die Führungsposition in Bezug auf die Grundplatte gelenkig verbunden und um eine zur Achse Z parallele Achse drehbeweglich ist zwischen einer geschlossenen Position und einer offenen Position und umgekehrt.

3. Ausfahrbare Struktur (20, 40, 50) nach Anspruch 2, **dadurch gekennzeichnet, dass**
• das erste Ende (18) des Führungshebels (17) in Bezug auf die Grundplatte (23) in einer Schwenkverbindung steht, das zweite Ende (19) fest mit der Mitte der Führungsrolle (15) verbunden ist, und dadurch, dass
• das elastisches Element (21) zwischen dem Führungshebel (17) und der Grundplatte (23) angeordnet ist und dazu bestimmt ist, so auf den Führungshebel (17) zu drücken, dass die Lagerrolle (15) gegen den dritten Punkt (14) gepresst wird.

4. Ausfahrbare Struktur (20, 40, 50) nach dem vorhergehenden Anspruch, **dadurch gekennzeichnet, dass** sie ein Haltesystem (19) für den Führungshebel (17) und die Führungsvorrichtung (22) in aufgerollter Konfiguration aufweist, dazu bestimmt, den Führungshebel (17) und die Führungsvorrichtung (22) gleichzeitig freizugeben, wenn das Maßband (16) von der aufgerollten Konfiguration in die ausgefahrene Konfiguration übergeht.

5. Ausfahrbare Struktur (20, 40) nach einem der Ansprüche 2 bis 4, **dadurch gekennzeichnet, dass** sie außerdem eine Kurvenscheibe (24) aufweist, die auf der Lagerrolle (15) positioniert ist, und dadurch, dass die Führungsvorrichtung (22) eine Laufrolle (25) aufweist, dazu bestimmt, so geführt zu werden, dass sie die Drehung der Führungsvorrichtung (22) lenkt.

6. Ausfahrbare Struktur (20, 40) nach dem vorhergehenden Anspruch, **dadurch gekennzeichnet, dass** die Kurvenscheibe (24) ein Rücklaufsperrenelement (26) aufweist, dazu bestimmt, die Drehung der Führungsvorrichtung (22) in die geschlossene Position zu verhindern.

7. Ausfahrbare Struktur (40, 50) nach einem der Ansprüche 1 bis 6, wobei das Maßband (16) zwei Enden (27, 28) hat, **dadurch gekennzeichnet, dass** ein erstes Ende (27) des Maßbands (16) an der Lagerrolle (15) befestigt ist, und dadurch, dass ein zweites Ende (28) des Maßbands (16) an der Grundplatte (23) befestigt ist.

8. Ausfahrbare Struktur (10, 20, 40, 50) nach einem der vorhergehenden Ansprüche, **dadurch gekennzeichnet, dass** sie außerdem einen gelenkigen Stiel (110) aufweist, der ausfahrbar ist, dazu bestimmt, an einer Plattform eines Satelliten (100) mittels eines Drehantriebsmotors befestigt zu werden.

9. Satellit (100), **dadurch gekennzeichnet, dass** er mindestens eine ausfahrbare Struktur (10, 20, 40, 50) nach dem vorhergehenden Anspruch aufweist.

## Claims

1. Deployable structure (10, 20, 40, 50) comprising:
• a mount (11) comprising a first point (12) and a second point (13) opposite and a third point (14),
• a storage reel (15) able to rotate about an axis Z,
• a tape spring (16) able to switch from a configuration in which it is wound about the axis Z in the storage reel (15) into a configuration in which it is deployed along an axis X substantially perpendicular to the axis Z, the first and second points (12, 13) forming a double support with the tape spring (16) so as to keep the tape spring (16) in the deployed configuration,
the third point (14) being able to form a simple support with the tape spring (16), the storage reel (15) being able to move with respect to the third point (14), the storage reel (15) being pressed against the third point (14) so as to guide the deployment of the tape spring (16), **characterized in that** the deployable structure comprises
• a guide lever (17) comprising two ends (18, 19), a first of the two ends (18) being pivot connected with respect to the mount (11), a second of the two ends (19) being secured to the centre of the guide reel (15),
• an elastic element (21) arranged between the guide lever (17) and the mount (11), and intended to push the guide lever (17) so as to press the storage reel (15) against the third point (14).

2. Deployable structure (20, 40, 50) according to Claim 1, **characterized in that** the mount (11) comprises a guide device (22) and a base (23), **in that** the first (12), second (13) and third (14) points are secured to the guide device (22), and **in that** the guide device is articulated with respect to the base and able to rotate about an axis parallel to the axis Z between a closed position and an open position and vice versa.

3. Deployable structure (20, 40, 50) according to Claim 2, **characterized in that**
• the first end (18) of the guide lever (17) is pivot connected with respect to the base (23), the second end (19) is secured to the centre of the guide reel (15), and **in that**
• the elastic element (21) is positioned between the guide lever (17) and the base (23) and intended to push the guide lever (17) so as to press the storage reel (15) against the third point (14).

4. Deployable structure (20, 40, 50) according to the preceding claim, **characterized in that** it comprises a retaining system (19) keeping the guide lever (17) and the guide device (22) in the wound configuration and intended to release the guide lever (17) and the guide device (22) simultaneously when the tape spring (16) switches from the wound configuration to the deployed configuration.

5. Deployable structure (20, 40) according to one of Claims 2 to 4, **characterized in that** it further comprises a cam (24) positioned on the storage reel (15) and **in that** the guide device (22) comprises a follower (25) intended to be guided in such a way as to command the rotation of the guide device (22).

6. Deployable structure (20, 40) according to the preceding claim, **characterized in that** the cam (24) comprises a nonreturn element (26) intended to prevent the guide device (22) from rotating towards the closed position.

7. Deployable structure (40, 50) according to one of Claims 1 to 6, the tape spring (16) having two ends (27, 28), **characterized in that** a first end (27) of the tape spring (16) is fixed to the storage reel (15) and **in that** a second end (28) of the tape spring (16) is fixed to the base (23).

8. Deployable structure (10, 20, 40, 50) according to one of the preceding claims, **characterized in that** it further comprises a deployable articulated mast (110) intended to be fixed on a platform of a satellite (100) by means of a rotational-drive motor.

9. Satellite (100), **characterized in that** it comprises at least one deployable structure (10, 20, 40, 50) according to the preceding claim.
